# FASCICULE DE BREVET EUROPEEN

(11) **EP 2 331 351 B1**
(45) Date de publication et mention de la délivrance du brevet: **04.01.2012**
(21) Numéro de dépôt: 09811115.6
(22) Date de dépôt: 01.09.2009
(51) Int. Cl.: B60C 15/06

(54) **PNEUMATIQUE POUR VEHICULES LOURDS COMPORTANT AU MOINS DEUX COUCHES ADDITIONNELLES DANS LES BOURRELETS**
REIFEN FÜR SCHWERLASTFAHRZEUGE MIT MINDESTENS ZWEI ZUSÄTZLICHEN LAGEN IN DEN WULSTEN
TYRE FOR HEAVY VEHICLES COMPRISING AT LEAST TWO ADDITIONAL LAYERS IN THE BEADS

(30) Priorité: 02.09.2008 FR 0855890
(43) Date de publication de la demande: 15.06.2011
(73) Titulaire: Société de Technologie MICHELIN, 63000 Clermont-Ferrand (FR); MICHELIN Recherche et Technique S.A., 1763 Granges-Paccot (CH)
(72) Inventeur: COGNE, Michael, F-63200 Riom (FR); DEGEORGES, Agnès, F-63100 Clermont-Ferrand (FR)
(74) Mandataire: Le Cam, Stéphane Georges Elie
(86) Numéro de dépôt international: PCT/EP2009/061293
(87) Numéro de publication internationale: WO 2010/026143

(56) Documents cités:
- EP-A- 1 595 996
- EP-A- 1 795 375
- WO-A-2005/016668
- FR-A- 2 887 813
- JP-A- 10 217 353
- JP-A- 2006 035 958
- US-A- 3 941 177
- US-A- 5 837 077

## Description

La présente invention concerne un pneumatique à armature de carcasse radiale et plus particulièrement un pneumatique destiné à équiper des véhicules portant de lourdes charges et roulant à vitesse soutenue, tels que, par exemple les camions, tracteurs, remorques, bus routiers, métro, engins agricoles ou de génie civil, avions, autres véhicules de transport ou de manutention.

L'armature de renforcement ou renforcement des pneumatiques et notamment des pneumatiques de véhicules de type poids-lourds est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisé pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base tels les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-fmis pour réaliser certains aspects architecturaux (tels que des nappes, tringles, etc.), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc., sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

L'armature de sommet comprend au moins une couche de travail ; lorsque ladite armature de sommet comporte au moins deux couches de travail, celles-ci sont formées d'éléments de renforcement métalliques inextensibles, parallèles entre eux dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

De tels pneumatiques comportent encore usuellement au niveau des bourrelets une ou plusieurs couches d'éléments de renforcement appelés raidisseur. Ces couches sont le plus souvent constituées d'éléments de renforcement orientés par rapport à la direction circonférentielle d'un angle inférieur à 45°, et le plus souvent inférieur à 25°. Ces couches d'éléments de renforcements ont notamment pour fonction de limiter les déplacements longitudinaux des matériaux constitutifs du bourrelet par rapport à la jante de la roue pour limiter une usure prématurée dudit bourrelet.

Par ailleurs, dans le cas d'ancrage de l'armature de sommet réalisé autour d'une tringle, qui consiste à enrouler au moins en partie l'armature de carcasse autour d'une tringle dans chacun des bourrelets en formant un retournement s'étendant plus ou moins haut dans le flanc, les couches d'éléments de renforcement ou raidisseur permettent encore de limiter l'apparition de décollement entre le retournement de l'armature de carcasse et les matériaux à base de mélanges polymériques entourant ledit retournement. En effet, ce type d'ancrage entre l'armature de carcasse et la tringle peut conduire, selon les conditions d'usage, à des risques de décollement entre le retournement de l'armature de carcasse et les matériaux à base de mélanges polymériques entourant ledit retournement.

Ces couches d'éléments de renforcement ou raidisseur sont le plus souvent disposées axialement à l'extérieur du retournement de l'armature de carcasse et s'étendent sur une hauteur dans le flanc supérieure à celle du retournement notamment pour couvrir les extrémités libres des éléments de renforcement dudit retournement.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 4%.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier s'en trouve pénalisée.

Il apparaît effectivement que certaines conditions de roulage conduisent notamment dans les parties du pneumatique environnant les bourrelets à une dégradation des masses polymériques nécessitant un remplacement des pneumatiques.

Des pneumatiques ayant des renforcements au niveau des bourrelets sont divulgués dans les document JP-A-2006 035 958, US-A-3 941 177 et EP-A-1 795 375.

Un but de l'invention est de fournir des pneumatiques pour véhicules portant de lourdes charges dont les performances d'endurance liées notamment aux zones des bourrelets du pneumatique sont améliorées par rapport aux pneumatiques usuels.

Ce but est atteint selon l'invention par un pneumatique à armature de carcasse radiale comprenant une armature de sommet, elle-même coiffée radialement d'une bande de roulement, ladite bande de roulement étant réunie à deux bourrelets par l'intermédiaire de deux flancs, l'armature de carcasse étant ancrée dans chacun des bourrelets pour former une zone d'ancrage, ledit pneumatique comprenant additionnellement dans une partie d'au moins chacune des zones d'ancrage au moins deux couches formées par enroulement circonférentielle d'une bande complexe formée de deux couches constituées d'éléments de renforcement continus passant d'une couche à l'autre, lesdits éléments de renforcement étant parallèles dans une couche et croisés d'une couche à l'autre avec des angles par rapport à la direction circonférentielle identiques en valeur absolue.

Les essais réalisés avec des pneumatiques ainsi définis selon l'invention ont mis en évidence que les performances en terme d'endurance du pneumatique sont améliorées par rapport à des pneumatiques de conception plus traditionnelles comportant des éléments de type raidisseur, comme décrit précédemment, constitués d'une ou plusieurs couches d'éléments de renforcement. Une interprétation de ces résultats peut être de constater que la bande complexe additionnelle, et plus exactement les éléments de renforcement de la bande complexe additionnelle, permet de limiter la propagation d'éventuelles amorces de fissures à l'extrémité du retournement de la couche d'armature de carcasse et qu'en outre, l'absence d'extrémités libres des couches de la bande complexe, qui correspondent aux extrémités de câbles sectionnées des couches d'éléments de renforcement usuelles, permet de ne pas venir recréer d'éventuelles sources de perturbation des mélanges polymériques.

Le pneumatique ainsi réalisé selon l'invention et plus spécifiquement la bande complexe qui comporte des couches d'éléments de renforcement parallèles dans une couche et croisés d'une couche à l'autre qui ne présentent pas d'extrémité sur leurs bords se caractérise par une mise en oeuvre relativement rapide ; en effet, deux couches sont réalisées simultanément par enroulement circonférentiel d'un élément préfabriqué que constitue la bande complexe. L'enroulement circonférentiel est en effet une technique relativement simple de mise en oeuvre et qui peut être effectuée avec une vitesse rapide ; en outre, comme rappelé précédemment, au moins deux couches sont réalisées simultanément.

Un enroulement circonférentiel correspond à un enroulement de la bande complexe de sorte que les spires formées présentent un angle avec la direction circonférentielle inférieur à 8°.

Selon un mode de réalisation préféré de l'invention, la distance radiale entre les éléments de renforcement respectifs de chacune des couches formant une bande complexe est inférieure à l'épaisseur d'une couche et de préférence inférieure à la moitié de l'épaisseur d'une couche.

Au sens de l'invention, la distance radiale entre les éléments de renforcement respectifs de chacune des couches est mesurée radialement entre les génératrices respectivement supérieure et inférieure desdits éléments de renforcement des couches radialement intérieure et radialement extérieure. L'épaisseur de la couche est également mesurée selon la direction radiale.

De préférence encore, chacune des couches étant formées d'éléments de renforcement entre deux calandrages de mélanges polymérique formant chacun une épaisseur respectivement radialement à l'extérieur et radialement à l'intérieur desdits éléments de renforcement, la distance radiale entre les éléments de renforcement respectifs de chacune des couches est sensiblement équivalente à la somme de l'épaisseur de mélange polymérique du calandrage radialement à l'extérieur des éléments de renforcement de la couche radialement intérieure et de l'épaisseur de mélange polymérique du calandrage radialement à l'intérieur des éléments de renforcement de la couche radialement extérieure.

La bande complexe peut être préalablement obtenue selon un procédé consistant à écraser un tube, lui-même formé par l'enroulement en spires jointives selon un angle donné par rapport à la direction longitudinale du tube, d'une bandelette dans laquelle des éléments de renforcements sont parallèles entre eux et à la direction longitudinale de ladite bandelette et enrobés dans un mélange polymérique. La largeur de la bandelette est ajustée en fonction de l'angle avec lequel les spires sont enroulées, de manière à rendre les spires jointives.

Lors de l'écrasement dudit tube, les spires étant parfaitement jointives, la bande complexe obtenue est constituée de deux couches d'éléments de renforcement continus passant d'une couche à l'autre, lesdits éléments de renforcement étant parallèles dans une couche et croisés d'une couche à l'autre avec des angles par rapport à la direction circonférentielle identiques en valeur absolue. La réalisation d'un tube avec des spires jointives permet d'obtenir des éléments de renforcement linéaires dans chacune des couches, exception faite des extrémités axiales de chacune des couches, au niveau desquelles les éléments de renforcement forment des boucles pour assurer la continuité d'une couche à l'autre.

Cette linéarité des éléments de renforcement dans chacune des couches permet de conférer des rigidités longitudinale et de cisaillement constantes sur la largeur des dites couches formant la bande complexe.

L'écrasement dudit tube permet également d'obtenir un couplage des couches de sorte que la distance radiale entre les éléments de renforcement respectifs de chacune des couches est sensiblement équivalente à la somme de l'épaisseur de mélange polymérique du calandrage radialement à l'extérieur des éléments de renforcement de la couche radialement intérieure et de l'épaisseur de mélange polymérique du calandrage radialement à l'intérieur des éléments de renforcement de la couche radialement extérieure, lesdits calandrages venant au contact l'un de l'autre.

Un tel couplage des deux couches favorise l'obtention d'une rigidité longitudinale et d'une rigidité de cisaillement élevées. Il en découle indirectement un allègement du pneumatique qui nécessiterait plusieurs épaisseurs de bande complexe si les couches formant celles-ci n'étaient pas suffisamment couplées afin d'obtenir les rigidités longitudinale et de cisaillement souhaitées.

Selon un mode de réalisation particulièrement avantageux, les éléments de renforcement de ladite bande complexe forment un angle avec la direction circonférentielle compris entre 10 et 45°.

Comme expliqué précédemment l'angle formé par les éléments de renforcement avec la direction circonférentielle correspond à l'angle que forment les spires du tube avec la direction longitudinale du tube avant écrasement de celui-ci. Des angles réduits peuvent faciliter la réalisation de la bande complexe selon le procédé tel que décrit précédemment.

Selon une première variante de réalisation, la bande complexe est enroulée circonférentiellement avec un recouvrement radial, de préférence égal à au moins la demi largeur de ladite bande complexe. Le recouvrement radial permet d'éviter la création de zones dans lesquelles la présence d'éléments de renforcement est moins importante. Un recouvrement radial d'au moins la demi largeur de la bande complexe autorise la réalisation simultanée de quatre couches de travail dont les éléments de renforcement sont croisées d'une couche à la suivante, les angles des éléments de renforcement étant identiques en valeur absolue dans chacune des couches.

Un recouvrement radial au moins égal aux deux tiers de la largeur de la bande complexe peut permettre la réalisation simultanée d'au moins six couches de travail.

Selon une autre variante de réalisation de l'invention, la bande complexe est enroulée circonférentiellement pour former des spires radialement juxtaposées. Une telle variante de réalisation autorise la création de deux couches de travail sans créer de surépaisseur.

Selon un premier mode de réalisation de l'invention, les éléments de renforcement de la bande complexe sont métalliques.

Avantageusement selon ce premier mode de réalisation de l'invention, les éléments de renforcement de la bande complexe sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 Gpa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement.

Les modules des mêmes éléments de renforcement peuvent être mesurés sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique.

Selon cette formulation relative à la section globale de l'élément de renforcement, les éléments de renforcement de la bande complexe sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 Gpa et supérieur à 10 GPa, de préférence compris entre 15 et 45 GPa et de préférence encore inférieure à 40 GPa.

De préférence également, le module tangent maximum des éléments de renforcement est inférieur à 65 GPa et de préférence encore inférieur à 60 GPa.

Selon un mode de réalisation préféré, les éléments de renforcements de la bande complexe sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la nappe additionnelle sont habituellement dénommés éléments "bi-module".

Selon une réalisation préférée de l'invention, la pente sensiblement constante et forte apparaît à partir d'un allongement relatif compris entre 0,1% et 0,5%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation de la bande complexe selon l'invention sont par exemple des assemblages de formule 21.23, dont la construction est 3x(0.26+6x0.23) 4.4/6.6 SS ; ce câble à torons est constitué de 21 fils élémentaires de formule 3 x (1+6), avec 3 torons tordus ensembles chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.23 présente un module sécant à 0,7% égal à 23 GPa et un module tangent maximum égal à 49 GPa.

De la même façon, un autre exemple d'éléments de renforcement est un assemblage de formule 21.28, dont la construction est 3x(0.32+6x0.28) 6.2/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.28 présente un module sécant à 0,7% égal à 27 GPa et un module tangent maximum égal à 49 GPa.

L'utilisation de tels éléments de renforcement dans la bande complexe permet notamment de réaliser simplement le tube et l'écrasement dudit tube selon le procédé décrit précédemment en limitant les risques de rupture des éléments de renforcement et améliorant l'aptitude de la bande complexe à demeurer plane après sa réalisation, notamment lorsque l'angle formé entre la direction circonférentielle et les éléments de renforcement des deux couches de sommet de travail est supérieur à 40°.

Les éléments métalliques sont préférentiellement des câbles d'acier.

Selon un deuxième mode de réalisation de l'invention, les éléments de renforcement de la bande complexe sont en matériau textile tels que des matériaux de type nylon, aramide, PET, rayonne, polycétone.

Selon un troisième mode de réalisation de l'invention, les éléments de renforcement de la bande complexe sont en matériau hybride. Il peut s'agir de matériaux hybrides textiles tels que des éléments de renforcement constitués d'aramide et de nylon tels que ceux décrits dans le document WO 02/085646 ou bien encore de matériaux hybrides combinant des matériaux textiles et des matériaux métalliques.

La réalisation de la bande complexe avec des éléments de renforcement textile ou hybride permet notamment d'apporter des avantages notamment en termes d'endurance sans trop pénaliser la masse du pneumatique, y compris en comparaison d'une seule couche additionnelle d'éléments de renforcement métalliques.

Selon un mode de réalisation plus particulièrement avantageux de l'invention, la bande complexe additionnelle est axialement extérieure à l'armature de carcasse. Selon ce mode de réalisation de l'invention, la bande complexe additionnelle apporte notamment une fonction de protection du bourrelet à l'égard de la jante, ou plus exactement du crochet de jante lorsque le pneumatique est monté sur ladite jante.

Avantageusement encore, l'armature de carcasse étant ancrée dans chacun des bourrelets par retournement d'au moins une couche d'éléments de renforcement autour d'une tringle pour former un retournement, l'extrémité radialement extérieure de la bande complexe additionnelle est radialement extérieure à l'extrémité du retournement de l'armature de carcasse. Selon une telle réalisation, le pneumatique comportant une armature de carcasse formant un retournement autour d'une tringle, la bande complexe additionnelle couvre l'extrémité dudit retournement pour diminuer voire éliminer les effets des extrémités des éléments de renforcement de l'armature de carcasse.

En outre, selon l'invention, la bande complexe ne présentant pas d'extrémités libres d'éléments de renforcement, cela permet de ne pas venir recréer d'éventuelles sources de perturbation des mélanges polymériques.

Selon une variante de réalisation avantageuse de l'invention, l'armature sommet est constituée d'au moins deux couches d'éléments de renforcement, l'angle formé avec la direction circonférentielle par lesdits éléments de renforcement étant inférieur à 30° et de préférence inférieur à 25°.

Une réalisation de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

L'armature de sommet peut encore être complétée, par exemple radialement entre l'armature de carcasse et la couche de travail radialement la plus à l'intérieur, par une couche de triangulation constituée d'éléments de renforcement inextensibles faisant, avec la direction circonférentielle, un angle supérieur à 40° et de préférence de même sens que celui de l'angle formé par les éléments de renforcement de la couche radialement la plus proche de l'armature de carcasse.

L'invention prévoit également que l'armature de sommet du pneumatique comporte en outre au moins une couche continue d'éléments de renforcement circonférentiels dont la largeur axiale est de préférence inférieure à la largeur axiale de la couche de sommet de travail axialement la plus large.

D'autres détails et caractéristiques avantageux de l'invention ressortiront ci-après de la description des exemples de réalisation de l'invention en référence aux figures 1 à 3 qui représentent :
- figure 1, une vue en perspective et en écorchée d'un schéma d'une bande complexe selon l'invention,
- figure 2, une vue méridienne d'un schéma de la bande complexe de la figure 1,
- figure 3, une vue méridienne d'un schéma d'un bourrelet d'un pneumatique comportant la bande complexe de la figure 1, selon un mode de réalisation de l'invention.

Les figures ne sont pas représentées à l'échelle pour en simplifier la compréhension.

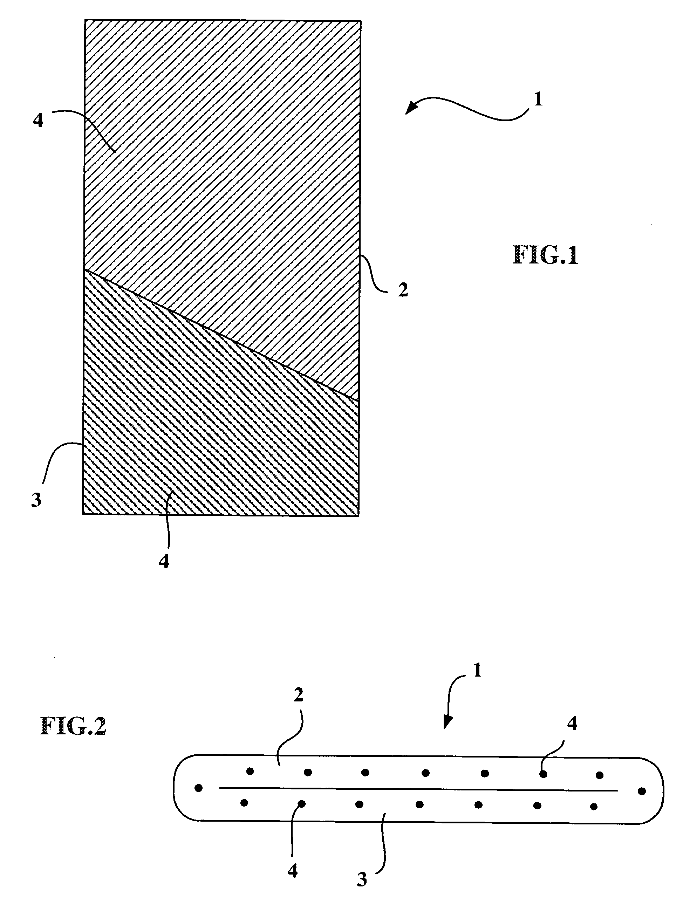

La figure 1 représente un schéma en écorché d'une bande complexe 1 constitué de deux couches 2, 3 d'éléments de renforcement 4 formant un angle avec la direction circonférentielle, parallèles dans une couche et croisés d'une couche à l'autre avec des angles par rapport à la direction circonférentielle identiques en valeur absolue.

La bande complexe 1 est obtenue selon un procédé qui consiste à écraser un tube formé par l'enroulement en spires jointives selon un angle donné par rapport à la direction longitudinale du tube, d'une bandelette dans laquelle des éléments de renforcements sont parallèles entre eux et à la direction longitudinale de ladite bandelette et enrobés dans un mélange polymérique. Lors de l'écrasement du tube, les spires étant parfaitement jointives, la bande complexe obtenue est constituée de deux couches d'éléments de renforcement continus passant d'une couche à l'autre.

La réalisation d'un tube avec des spires jointives permet d'obtenir des éléments de renforcement 4 linéaires dans chacune des couches, exception faite des extrémités axiales de chacune des couches, au niveau desquelles les éléments de renforcement forment des boucles pour assurer la continuité d'une couche à l'autre.

La figure 2 correspond à une vue méridienne d'une représentation schématique d'une telle bande complexe 1. Cette figure montre que la bande complexe 1 est constituée des deux couches 2, 3 d'éléments de renforcement 4 dans les quelles lesdits éléments de renforcement sont continus d'une couche à l'autre.

La bande complexe 1 ainsi représentée sur les figures présentent l'avantage de constituer un système de deux couches d'éléments de renforcement parallèles entre eux et croisés d'une ouche à la suivante, lesdites couches ne comportant pas d'extrémités d'éléments de renforcement libres.

La bande complexe 1 est réalisée à partir d'une bandelette constituée d'éléments de renforcement présentant un diamètre égal à 1.14 mm noyés entre deux calandrages d'épaisseur 0.11 mm. Chacune des couches présentent ainsi une épaisseur de 1.36 mm et la bande complexe une épaisseur de 2.72 mm, la distance radiale entre les éléments de renforcement respectifs de chacune des couches étant égale à 0.22 mm. La distance radiale entre les éléments de renforcement respectifs de chacune des couches est égale à la somme des épaisseurs du calandrage radialement à l'extérieur des éléments de renforcement de la couche radialement intérieure et du calandrage radialement à l'intérieur des éléments de renforcement de la couche radialement extérieure.

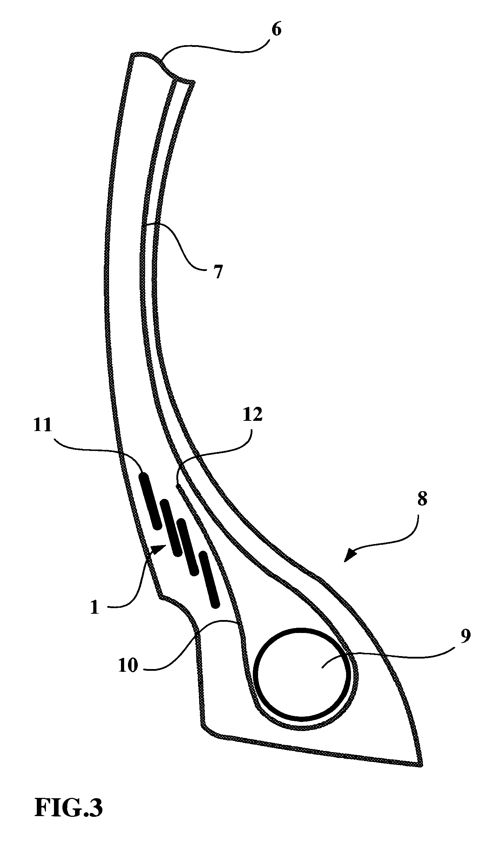

La figure 3 illustre un bourrelet 5 d'un pneumatique 6 de dimension 295/60 R 22.5 X. Ledit pneumatique 6 comprend une armature de carcasse radiale 7 ancrée dans deux bourrelets 8. L'armature de carcasse 7 est formée d'une seule couche de câbles métalliques retournée autour d'une tringle 9 pour former un retournement 10.

Une bande complexe 1 est disposée par enroulement circonférentiel pour former deux couches d'éléments de renforcement axialement adjacentes au retournement 10 de l'armature de carcasse 7. L'enroulement est effectué selon cette représentation pour obtenir un recouvrement axial de la moitié de la bande à chaque tour. L'enroulement de la bande complexe 1 forme ainsi quatre couches radialement superposées d'éléments de renforcement parallèles entre eux dans une même couche et croisés d'une couche à la suivante sans extrémités libres.

Selon d'autres variantes de réalisation les spires formées lors de l'enroulement de la bande complexe peuvent être juxtaposées de façon à ne former que deux couches d'éléments radialement superposées. Les spires peuvent encore être axialement recouvertes au 2/3 de la largeur de la bande complexe, lors de l'enroulement, pour former six couches radialement superposées.

Les éléments de renforcement de la bande complexe additionnelle sont de type polyamide aliphatique 140x2.

L'enroulement circonférentiel de la bande complexe 1 est réalisé de sorte que l'extrémité radialement extérieure 11 de la bande complexe est radialement extérieure à l'extrémité radialement extérieure 12 du retournement 10 de l'armature de carcasse 7.

Des essais ont été réalisés avec le pneumatique réalisé selon l'invention conformément à la représentation de la figure 3 et comparés avec un pneumatique de référence identique mais réalisé selon une configuration usuelle, c'est-à-dire ne comportant pas la bande complexe additionnelle mais une couche unique d'éléments de renforcement métalliques de type 3.18 NF formant un angle de 22° avec la direction circonférentielle.

Les essais ont été réalisés avec des éléments de renforcement de la bande complexe additionnelle textiles de type polyamide aliphatique 140x2.

Les premiers essais d'endurance ont été réalisés en équipant des véhicules identiques avec chacun des pneumatiques et en faisant suivre des parcours en ligne droite à chacun des véhicules, les pneumatiques étant soumis à des charges supérieures à la charge nominale pour accélérer ce type de test.

Le véhicule de référence comportant les pneumatiques usuels est associé à une charge par pneumatique de 3600 Kg en début de roulage et évolue pour atteindre une charge de 4350 Kg en fin de roulage.

Le véhicule comportant les pneumatiques selon l'invention est associé à une charge par pneumatique de 3800 Kg en début de roulage et évolue pour atteindre une charge de 4800 Kg en fin de roulage.

Les essais sont stoppés lorsque le pneumatique est endommagé et/ou ne fonctionne plus de façon normale.

Les essais ainsi réalisés ont montré que le véhicule équipé de pneumatiques selon l'invention a parcouru une distance équivalente à la distance parcourue par les véhicules de référence. Il apparaît donc que les pneumatiques selon l'invention sont plus performants que les pneumatiques de référence puisqu'ils sont soumis à des contraintes de charge supérieure.

D'autres essais d'endurance ont été réalisés sur une machine de tests en alternant des séquences de virage à gauche, à droite puis de roulage en ligne droite dans des conditions de charge variant de 60 à 200 % de la charge nominale et de poussée variant de 0 à 0.35 fois la charge appliquée. La vitesse est comprise entre 30 et 70 km/h. Les essais sont stoppés lorsque le pneumatique est endommagé et/ou ne fonctionne plus de façon normale.

Les résultats obtenus montrent des gains en distances parcourues par les pneumatiques selon l'invention supérieurs à la distance parcourue par les pneumatiques de référence.

## Revendications

1. Pneumatique (6) à armature de carcasse radiale (7) comprenant une armature de sommet, elle-même coiffée radialement d'une bande de roulement, ladite bande de roulement étant réunie à deux bourrelets (5) par l'intermédiaire de deux flancs, l'armature de carcasse étant ancrée dans chacun des bourrelets pour former une zone d'ancrage, ledit pneumatique comprenant additionnellement dans une partie d'au moins chacune des zones d'ancrage au moins deux couches formées par enroulement circonférentiel d'une bande complexe (1) formée de deux couches (2, 3) constituées d'éléments de renforcement (4) continus passant d'une couche à l'autre, lesdites couches ne présentant pas d'extrémités libres sur leurs bords **caractérisé en ce que** lesdits éléments de renforcement (4) étant parallèles dans une couche et croisés d'une couche à l'autre avec des angles par rapport à la direction circonférentielle identiques en valeur absolue.

2. Pneumatique (6) selon la revendication 1, **caractérisé en ce que** la distance radiale entre les éléments de renforcement (4) respectifs de chacune des couches (2, 3) formant une bande complexe (1) est inférieure à l'épaisseur d'une couche (2, 3) et de préférence inférieure à la moitié de l'épaisseur d'une couche (2, 3).

3. Pneumatique (6) selon la revendication 1 ou 2, **caractérisé en ce que** les éléments de renforcement (4) de ladite bande complexe (1) forment un angle avec la direction circonférentielle compris entre 10 et 45°.

4. Pneumatique (6) selon la revendication 1 à 3, **caractérisé en ce que** la bande complexe (1) est enroulée circonférentiellement avec un recouvrement radial, de préférence égal à au moins la demi largeur de ladite bande complexe (1).

5. Pneumatique (6) selon la revendication 1 à 3, **caractérisé en ce que** la bande complexe (1) est enroulée circonférentiellement pour former des spires radialement juxtaposées.

6. Pneumatique (6) selon l'une des revendications précédentes, **caractérisé en ce que** les éléments de renforcement (4) de la bande complexe (1) additionnelle sont métalliques.

7. Pneumatique (6) selon la revendication 6, **caractérisé en ce que** les éléments de renforcement (4) de la bande complexe (1) additionnelle sont des éléments de renforcement métalliques présentant un module sécant à 0,7 % d'allongement compris entre 10 et 120 GPa et un module tangent maximum inférieur à 150 GPa.

8. Pneumatique (6) selon l'une des revendications 1 à 5, **caractérisé en ce que** les éléments de renforcement (4) de la bande complexe (1) additionnelle sont en matériau textile.

9. Pneumatique (6) selon l'une des revendications à 5, **caractérisé en ce que** les éléments de renforcement (4) de la bande complexe (1) additionnelle sont en matériau hybride.

10. Pneumatique (6) selon l'une des revendications précédentes, **caractérisé en ce que** ladite bande complexe (1) additionnelle est axialement extérieure à l' armature de carcasse (7).

11. Pneumatique (6) selon l'une des revendications précédentes, l'armature de carcasse (7) étant ancrée dans chacun des bourrelets par retournement d'au moins une couche d'éléments de renforcement autour d'une tringle (9) pour former un retournement (10), **caractérisé en ce que** l'extrémité radialement extérieure (11) de la bande complexe (1) additionnelle est radialement extérieure à l'extrémité (12) du retournement (10) de l'armature de carcasse (7).

## Claims

1. Tyre (6) with a radial carcass reinforcement (7) comprising a crown reinforcement, itself radially capped by a tread strip, the said tread strip being connected to two beads (5) via two sidewalls, the carcass reinforcement being anchored in each of the beads to form an anchorage region, said tyre comprising additionally, in part of at least each of the anchorage regions, at least two layers formed by circumferential winding of a complex strip (1) formed of two layers (2, 3) consisting of continuous reinforcing elements (4) passing from one layer to the other, said layers having no free ends on their edges, **characterized in that** the said reinforcing elements (4) being parallel within a layer and crossed from one layer to the other at angles with respect to the circumferential direction that are identical in terms of absolute value.

2. Tyre (6) according to Claim 1, **characterized in that** the radial distance between the respective reinforcing elements (4) of each of the layers (2, 3) forming a complex strip (1) is less than the thickness of a layer (2, 3) and preferably less than half the thickness of a layer (2, 3).

3. Tyre (6) according to Claim 1 or 2, **characterized in that** the reinforcing elements (4) of the said complex strip (1) make an angle of between 10 and 45° with the circumferential direction.

4. Tyre (6) according to Claim 1 to 3, **characterized in that** the complex strip (1) is wound circumferentially with an axial overlap, preferably equal to at least half the width of the said complex strip (1).

5. Tyre (6) according to Claim 1 to 3, **characterized in that** the complex strip (1) is wound circumferentially to form juxtaposed turns.

6. Tyre (6) according to one of the preceding claims, **characterized in that** the reinforcing elements (4) of the additional complex strip (1) are made of metal.

7. Tyre (6) according to Claim 6, **characterized in that** the reinforcing elements (4) of the additional complex strip (1) are metal reinforcing elements having a secant modulus at 0.7% elongation of between 10 and 120 GPa and a maximum tangent modulus of less than 150 GPa.

8. Tyre (6) according to one of Claims 1 to 5, **characterized in that** the reinforcing elements (4) of the additional complex strip (1) are made of a textile material.

9. Tyre (6) according to one of Claims 1 to 5, **characterized in that** the reinforcing elements (4) of the additional complex strip (1) are made of a hybrid material.

10. Tyre (6) according to one of the preceding claims, **characterized in that** the said additional complex strip (1) is axially on the outside of the carcass reinforcement (7).

11. Tyre (6) according to one of the preceding claims, the carcass reinforcement (7) being anchored in each of the beads by turning at least one layer of reinforcing elements back around a bead wire (9) to form a turn-back (10), **characterized in that** the radially outer end (11) of the additional complex strip (1) is radially on the outside of the turned-back end (12) of the carcass reinforcement (7).

## Patentansprüche

1. Luftreifen (6) mit radialer Karkassenbewehrung (7), die eine Scheitelbewehrung enthält, welche selbst radial von einem Laufstreifen überlagert wird ist, wobei der Laufstreifen über zwei Flanken mit zwei Wülsten (5) verbunden ist, wobei die Karkassenbewehrung in jedem der Wülste verankert ist, um eine Verankerungszone zu bilden, wobei der Luftreifen zusätzlich in einem Teil mindestens jeder der Verankerungszonen mindestens zwei Schichten enthält, die durch Umfangsaufwickeln eines komplexen Bands (1) geformt werden, das aus zwei Schichten (2, 3) geformt ist, die aus durchgehenden Verstärkungselementen (4) bestehen, die von einer Schicht zur anderen gehen, wobei die Schichten keine freien Enden an ihren Rändern haben, **dadurch gekennzeichnet, dass** die Verstärkungselemente (4) in einer Schicht parallel sind und sich von einer Schicht zur anderen kreuzen, mit Winkeln bezüglich der Umfangsrichtung, die im Absolutwert gleich sind.

2. Luftreifen (6) nach Anspruch 1, **dadurch gekennzeichnet, dass** der radiale Abstand zwischen den Verstärkungselementen (4) jeder der ein komplexes Band (1) bildenden Schichten (2, 3) geringer als die Dicke einer Schicht (2, 3) und vorzugsweise geringer als die Hälfte der Dicke einer Schicht (2, 3) ist.

3. Luftreifen (6) nach Anspruch 1 oder 2, **dadurch gekennzeichnet, dass** die Verstärkungselemente (4) des komplexen Bands (1) mit der Umfangsrichtung einen Winkel bilden, der zwischen 10 und 45° liegt.

4. Luftreifen (6) nach Anspruch 1 bis 3, **dadurch gekennzeichnet, dass** das komplexe Band (1) in Umfangsrichtung mit einer radialen Überlappung gewickelt ist, die vorzugsweise gleich mindestens der halben Breite des komplexen Bands (1) ist.

5. Luftreifen (6) nach Anspruch 1 bis 3, **dadurch gekennzeichnet, dass** das komplexe Band (1) in Umfangsrichtung gewickelt wird, um radial nebeneinander liegende Windungen zu formen.

6. Luftreifen (6) nach einem der vorhergehenden Ansprüche, **dadurch gekennzeichnet, dass** die Verstärkungselemente (4) des zusätzlichen komplexen Bands (1) metallisch sind.

7. Luftreifen (6) nach Anspruch 6, **dadurch gekennzeichnet, dass** die Verstärkungselemente (4) des zusätzlichen komplexen Bands (1) metallische Verstärkungselemente sind, die einen Sekantenmodul bei 0,7 % Dehnung zwischen 10 und 120 GPa und einen maximalen Tangentenmodul geringer als 150 GPa haben.

8. Luftreifen (6) nach einem der Ansprüche 1 bis 5, **dadurch gekennzeichnet, dass** die Verstärkungselemente (4) des zusätzlichen komplexen Bands (1) aus textilem Material sind.

9. Luftreifen (6) nach einem der Ansprüche 1 bis 5, **dadurch gekennzeichnet, dass** die Verstärkungselemente (4) des zusätzlichen komplexen Bands (1) aus hybridem Material sind.

10. Luftreifen (6) nach einem der vorhergehenden Ansprüche, **dadurch gekennzeichnet, dass** das zusätzliche komplexe Band (1) zur Karkassenbewehrung (7) axial außen liegt.

11. Luftreifen (6) nach einem der vorhergehenden Ansprüche, wobei die Karkassenbewehrung (7) in jedem der Wülste durch Umschlag mindestens einer Schicht von Verstärkungselementen um einen Wulstkern (9) verankert ist, um einen Umschlag (10) zu formen, **dadurch gekennzeichnet, dass** das radial äußere Ende (11) des zusätzlichen komplexen Bands (1) bezüglich des Endes (12) des Umschlags (10) der Karkassenbewehrung (7) radial außen liegt.
